# EUROPEAN PATENT SPECIFICATION

(11) **EP 0 997 496 B1**
(45) Date of publication and mention of the grant of the patent: **01.03.2006**
(21) Application number: 99308397.1
(22) Date of filing: 25.10.1999
(51) Int. Cl.: C08L 77/00, B29C 65/00

(54) **Weldable polyamide resin compositions production thereof, and moulded products thereof**
Verschweissbare Polyamidzusammensetzungen, deren Herstellung und Formteile daraus
Compositions de polyamides soudables, leur procédé de préparation et les objets moulés à partirs de cette composition

(30) Priority: 26.10.1998 JP 30454498; 28.04.1999 JP 12189799
(43) Date of publication of application: 03.05.2000
(73) Proprietor: TORAY INDUSTRIES, INC., Tokyo 103-8666 (JP)
(72) Inventor: Matsuoka, Hideo, Nagoya-shi, Aichi 458-0044 (JP); Okita, Shigeru, Kawasaki-shi, Kanagawa 211-0025 (JP)
(74) Representative: Coleiro, Raymond

(56) References cited:
- EP-A- 0 536 966
- EP-A- 0 540 842
- WO-A-97/17189
- US-A- 4 105 709
- US-A- 4 174 358
- US-A- 5 154 979
- PATENT ABSTRACTS OF JAPAN vol. 1995, no. 02, 31 March 1995 (1995-03-31) & JP 06 322264 A (ASAHI CHEM IND CO LTD), 22 November 1994 (1994-11-22)
- PATENT ABSTRACTS OF JAPAN vol. 1998, no. 13, 30 November 1998 (1998-11-30) & JP 10 204286 A (TORAY IND INC), 4 August 1998 (1998-08-04)
- PATENT ABSTRACTS OF JAPAN vol. 1998, no. 14, 31 December 1998 (1998-12-31) & JP 10 231420 A (TORAY IND INC), 2 September 1998 (1998-09-02)
- KAGAN V A ET AL: "OPTIMIZING THE VIBRATION WELDING OF GLASS-REINFORCED NYLON JOINTS" PLASTICS ENGINEERING,US,SOCIETY OF PLASTICS ENGINEERS,INC. GREENWICH, CONN, vol. 52, no. 9, page 39-41 XP000636014 ISSN: 0091-9578
- POTENTE H ET AL: "FRICTION WELDING OF POLYAMIDES" POLYMER ENGINEERING & SCIENCE,US,SOCIETY OF PLASTICS ENGINEERS, vol. 37, no. 4, page 726-737 XP000697920 ISSN: 0032-3888

## Description

The present invention relates to a weldable resin composition which gives molded items superior in heat resistance, external appearance, dimensional stability, and uniform weldability. More particularly, the present invention relates to a weldable resin composition, a process for production thereof, and a molded item thereof, the resin composition being suitable for production of a hollow object by welding from two or more melt-molded items.

Nylon resin is widely used for automobiles and machine parts on account of its good moldability, heat resistance, toughness, oil and gasoline resistance, and wear resistance. The development of nylon resin in this field has been motivated mainly by substitution for metallic materials. Substitution actually proceeded from those parts in which nylon resin brings out its merit, such as weight reduction and corrosion prevention. With recent improvement in material performance and molding technology, nylon resin has reached a stage at which studies are made on its application to large complicated parts whose substitution has been considered difficult.

Making such parts from nylon resin needs not only individual molding technologies (such as injection molding, extrusion molding and blow molding) but also post-processing technologies (such as cutting, bonding and welding) in combination. Unfortunately, conventional nylon resin compositions are formulated without post-processing being taken into account. If two or more parts of glass-reinforced nylon resin are to be welded together (by vibration welding or injection welding) to form a composite part of desired shape, it is difficult to achieve the desired level of strength in the weld zone. This is true particularly with large parts. Thus the use of nylon resin has been limited.

A first problem addressed by the present invention is to provide a weldable nylon resin composition which gives molded items without posing a problem of weld strength and a second problem is to provide a weldable nylon resin composition for production of molded items with intricately curved welding surfaces, especially while, at the same time, ensuring high weld strength.

A third problem addressed by the present invention is to provide a weldable nylon resin composition which yields molded items with high weld strength while retaining nylon's inherent characteristics such as good moldability, heat resistance, toughness, oil and gasoline resistance, wear resistance and surface smoothness.

According to a first aspect, the present invention provides aweldable resin composition for producing articles capable of weld-bonding by vibration welding, the resin composition comprising 100 parts by weight of a nylon resin as component (A), 0.1-50 parts by weight of a polyolefin resin as component (B) and 10-150 parts by weight of glass fiber as component (C) blended together, the resin composition having a melt viscosity whose coefficient of shear rate dependence is higher than 1.05,
wherein the coefficient of shear rate dependence is defined as:
ratio of increase in melt viscosity at a low shear rate/ratio of increase in melt viscosity at a high shear rate; and

wherein the ratio of increase in melt viscosity at a low shear rate is defined as:
melt viscosity of the weldable resin composition at a low shear rate/melt viscosity of the weldable resin composition excluding component (B) at a low shear rate; and

wherein the ratio of increase in melt viscosity at a high shear rate is defined as:
melt viscosity of the weldable resin composition as a high shear rate/melt viscosity of the weldable resin composition excluding component (B) at a high shear rate, in which the low shear rate is 60 sec⁻¹, the high shear rate is 6000 sec⁻¹, and the melt viscosity (poise) is measured at 20°C higher than the melting point of nylon resin (A).

According to a second aspect, the present invention provides a process for producing a weldable resin composition, which process comprises melt-blending together 100 parts by weight of nylon resin as component (A), 0.1-50 parts by weight of polyolefin resin as component (B), 10-150 parts by weight of glass fiber as component (C), 0-3 parts by weight of a copper compound as component (D) and 0-5 parts by weight of a silicone compound as component (E). This embodiment may be modified such that the components (A), (C), (D), and (E) are melt-blended together and the resulting composition is subsequently incorporated with the component (B).

Additional aspects of the present invention include a molded item made of the weldable resin composition, a method of producing a molded product by welding from more than one molded item made of the weldable resin composition, and a molded product produced by the method.

Preferred embodiments of the invention will now be described.

In the following description, "weight" means "mass". The term "welding" means a process for melting the respective contact surfaces of molded items such that the molten surfaces bond together. Welding is accomplished by vibration welding.
Vibration welding is desirable because of its good balance between high strength and easy processing.

Component (A) used in a composition embodying the present invention is a nylon resin, which is a polyamide derived at least mainly from dicarboxylic acid and any of amino acid, lactam, and diamine.

Typical examples of the major constituents are listed below.
- Amino acids such as 6-aminocaproic acid, 11-aminoundecanoic acid, 12-aminododecanoic acid and p-aminomethyl benzoic acid.
- Lactams such as ε-caprolactam and ω-laurolactam.
- Aliphatic, alicyclic, and aromatic diamines, such as tetramethylenediamine, hexamethylenediamine, 2-methylpentamethylenediamine, nonamethylenediamine, undecamethylenediamine, dodecamethylenediamine, 2,2,4- and/or 2,4,4,-trimethylhexamethylenediamine, 5-methylnonamethylenediamine, m-xylylenediamine, p-xylylenediamine, 1,3-bis(aminomethyl)cyclohexane, 1,4-bis (aminomethyl) cyclohexane, 1-amino-3-aminomethyl-3, 5, 5-trimethylcyclohexane, bis (4-aminocyclohexyl)methane, bis(3-methyl-4-aminocyclohexyl)methane, 2,2-bis(4-aminocyclohexyl)propane, bis(aminopropyl)piperazine and aminoethylpiperazine.
- Aliphatic, alicyclic, and aromatic dicarboxylic acids, such as adipic acid, suberic acid, azelaic acid, sebacic acid, dodecanoic acid, terephthalic acid, isophthalic acid, 2-chloroterephthalic acid, 2-methylterephthalic acid, 5-methylisophthalic acid, 5-sodium sulfoisophthalic acid, hexahydroterephthalic acid and hexahydroisophthalic acid.

The nylon resin used in a composition embodying the present invention may be a homopolymer or copolymer produced from these raw materials. Such polymers may be used alone or in combination with one another.

The nylon resin preferably has a melting point higher than 200°C so that it has good heat resistance and high strength. Typical examples of the nylon resin are listed below. Polycaproamide (nylon 6), polyhexamethylene adipamide (nylon 66), polycaproamide/polyhexamethylene adipamide copolymer (nylon 6/66), polytetramethylene adipamide (nylon 46), polyhexamethylene sebacamide (nylon 610), polyhexamethylene dodecamide (nylon 612), polyhexamethylene terephthalamide/polycaproamide copolymer (nylon 6T/6), polyhexamethylene adipamide/polyhexamethylene terephthalamide copolymer (nylon 66/6T), polyhexamethylene adipamide/polyhexamethylene isophthalamide copolyner (nylon 66/6I), polyhexamethylene adipamide/polyhexamethylene terephthalamide/polyhexamethylene isophthalamide copolymer (nylon 66/6T/6I), polyhexamethylene terephthalamide/polyhexamethylene isophthalamide copolymer (nylon 6T/6I), polyhexamethylene terephthalamide/polydodecaneamide copolymer (nylon 6T/12), polyhexamethylene terephthalamide/ poly(2-methylpentamethylene)terephthalamide copolymer (nylon 6T/M5T), polyxylylene adipamide (nylon XD6), and polynonamethylene terephthalamide (nylon 9T) . They may be used in the form of blends or copolymers.

Preferable among these examples are nylon 6, nylon 66, nylon 6/66 copolymer, copolymer nylon composed mainly (i.e. at least 50 wt%) of nylon 6 or nylon 66, nylon 610, and copolymers (such as nylon 6T/66 copolymer, nylon 6T/61 copolymer, and nylon 6T/6 copolymer) having hexamethylene terephthalamide units. Nylon 6, nylon 66, and copolymers thereof are most desirable.

Two or more kinds of these nylon resins may be used so as to impart their characteristic properties, such as moldability, heat resistance and weldability. A desirable nylon resin composition consists, by wt% of the total nylon resin, of 99-50 wt% of component (a) and 1-50 wt% (preferably 15-30 wt%) of component (b), where component (a) is at least one kind of nylon resin selected from nylon 66, nylon 6, and nylon copolymer composed mainly of them, and component (b) is at least one kind of nylon resin other than mentioned above (selected from higher nylons such as nylon 610 and nylon 612, and semiaromatic nylons such as nylon 6T/6, nylon 6T/12, nylon 6T/66, nylon 66/6I, nylon 66/6T/6I, nylon 6T/6I and nylon 6T/M5T). Such a composition is desirable from the standpoint of improved weldability.

These nylon resins desirably have a degree of polymerization such as to provide a relative viscosity of i.5-5.0, particularly 2.0-4.0 (measured for 1% solution in 98% conc. sulfuric acid at 25°C).

Component (B) used in a composition embodying the present invention is a polyolefin skeleton in the main chain. It may be selected so that it adequately controls the melt viscosity of the resulting resin composition. For example, it may be crystalline or amorphous or a composition thereof. It may be a homopolymer of unsaturated monomer or a copolymer of more than one monomer or a composition thereof . The copolymer may be a random copolymer or a block copolymer or a composition thereof.

Examples of the polyolefin rein as component (B) are listed below.
- Homopolymers such as polyethylene, polypropylene, polystyrene, polyacrylate ester, polymethacrylate ester, poly-1-butene, poly-1-pentene, and polymethylpentene.
- Ethylene-α-olefin copolymers.
- Homopolymers of vinyl alcohol ester.
- Polymers obtained by partial or whole hydrolysis of homopolymer of vinyl alcohol ester [polymer obtained by partial or whole hydrolysis of copolymer of (ethylene and/or propylene) and vinyl alcohol ester].
- Copolymers of (ethylene and/or propylene) and (unsaturated carboxylic acid and/or unsaturated carboxylic ester), such as copolymer of ethylene and (meth)acrylic acid and copolymer of ethylene, (meth) acrylic acid, and (meth)acrylic ester.
- Copolymers of (ethylene and/or propylene) and (unsaturated carboxylic acid and/or unsaturated carboxylic ester), with its carboxylic groups at least partly neutralized to form a metal salt, such as ethylene- (meth) acrylic acid copolymer, with its carboxylic groups at least partly neutralized to form a metal salt, and ethylene-(meth)acrylic acid-(meth) acrylic ester copolymer, with its carboxylic groups at least partly neutralized to form a metal salt.
- Block copolymers of conjugated diene and vinyl aromatic hydrocarbon.
- Hydrogenated products of such block copolymers.

Preferable among these examples are polyethylene, polypropylene, polyacrylate ester, polymethacrylate ester, ethylene-α-olefin copolymer, a copolymer of (ethylene and/or propylene) and (unsaturated carboxylic acid and/or unsaturated carboxylic ester), with its carboxylic groups at least partly neutralized to form a metal salt, block copolymers of conjugated diene and vinyl aromatic hydrocarbon, and hydrogenated products of such block copolymers. Polyethylene and ethylene-α-olefin copolymers, are particularly desirable.

The ethylene-α-olefin copolymer is preferably derived from ethylene and at least one kind of α-olefin having 3-20 carbon atoms and is preferably derived from ethylene and at least one kind of α-olefin having 3-12 carbon atoms. This copolymer effectively contributes to mechanical strength and modification.

Examples of the α-olefin having 3-20 carbon atoms include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-dicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene, and 12-ethyl-1-tetradecene. They may be used alone or in combination with one another.

The ethylene-α-olefin copolymer preferably contains α-olefin comonomer in an amount of 1-30 mol%, more preferably 2-25 mol%, still more preferably 3-20 mol%. The copolymer may additionally contain at least one comonomer such as 1,4-hexadiene, dicyclopentadiene, 2,5-norbornadiene, 5-ethylidenenorbornane, 5-ethyl-2,5-norbornadiene and 5-(1'-propenyl)-2-norbornene.

The copolymer of (ethylene and/or propylene) and (unsaturated carboxylic acid and/or unsaturated carboxylic ester) may contain as the unsaturated carboxylic acid either acrylic acid or methacrylic acid or a mixture thereof and also contain as the unsaturated carboxylic ester their methyl ester, ethyl ester, propyl ester, butyl ester, pentyl ester, hexyl ester, heptyl ester, octyl ester, nonyl ester, or decyl ester, or a mixture thereof. Preferable among these copolymers are ethyrene-methacrylic acid copolymer and ethylene-methacrylic acid-acrylic ester copolymer.

As for the copolymer of (ethylene and/or propylene) and (unsaturated carboxylic acid and/or unsaturated carboxylic ester), with its carboxylic groups at least partly neutralized to form a metal salt, the species of metal
that may be used are alkali metals (such as Li, Na, K, Mg, Ca, Sr and Ba) and alkali earth metals (such as Al, Sn, Sb, Ti, Mn, Fe, Ni, Cu, Zn, and Cd). Of these metals, Zn is most desirable.

The block copolymer of conjugated diene and vinyl aromatic hydrocarbon denotes any block copolymer elastomer of A-B type or A-B-A' type, with the terminal blocks A and A' being the same or different and the aromatic moiety being monocyclic or polycyclic. It is a thermoplastic homopolymer or copolymer derived from a vinyl aromatic hydrocarbon, which is exemplified by styrene, α-methylstyrene, vinyltoluene, vinylxylene, ethylvinylxylene and vinylnaphthalene, and mixture thereof. Block B is a polymer derived from a conjugated diene hydrocarbon which is exemplified by 1,3-butadiene, 2,3-dimethylbutadiene, isoprene and 1,3-pentadiene, and a mixture thereof. Alternatively, block B may be hydrogenated product.

The polyolefin resin as component (B) in a composition embodying the present invention is preferably a modified polyolefin resin which is obtained by modifying the above-mentioned polyolefin resin with at least one compound selected from unsaturated carboxylic acids and derivatives thereof. Such a modified polyolefin resin is characterized by its improved compatibility and ability to increase weld strength with a small amount added.

The modifier may be a derivative of an unsaturated carboxylic acid in the form of a metal salt, ester, imide or acid anhydride.

Examples of the unsaturated carboxylic acid and derivative thereof are listed below.
- Acrylic acid, methacrylic acid, maleic acid, fumaric acid, itaconic acid, crotonic acid, methylmaleic acid, methylfumaric acid, mesaconic acid, citraconic acid and glutaconic acid, and metal salts thereof.
- Methyl hydrogen maleate, methyl hydrogen itaconate, methyl acrylate, ethyl acrylate, butyl acrylate, 2-ethylhexyl acrylate, hydroxyethyl acrylate, methyl methacrylate, 2-ethylhexyl methacrylate, hydroxyethyl methacrylate, aminoethyl methacrylate, dimethyl maleate, and dimethyl itaconate.
- Maleic anhydride, itaconic anhydride, citraconic anhydride, endobicyclo(2,2,1)-5-heptene-2,3-dicarboxylic acid and endobicyclo-(2,2,1)-5-heptene-2,3-dicarboxylic anhydride.
- Maleimide, N-ethylnaleimide, N-butylmaleimide and N-phenylmaleimide.
- Glycidyl acrylate, glycidyl methacrylate, glycidyl ethacrylate, glycidyl itaconate and glycidyl citraconate.
- 5-norbornene-2,3-dicarboxylic acid.
Of these examples, unsaturated dicarboxylic acids and acid anhydrides thereof are preferred. Maleic acid and maleic anhydride are particularly suitable.

The functional group-containing component may be incorporated into the olefin compound by, for example, copolymerization of an olefin compound (as the major constituent) with a functional group-containing olefin compound. Another way is by the grafting of an unmodified polyolefin with a functional group-containing olefin compound with the aid of a radical initiator. The amount of the functional group-containing component is preferably 0.001-40 mol%, more preferably 0.01-35 mol%, of the total amount of olefin monomer in the modified polyolefin.

The polyolefin resin as component (B) in a composition, embodying the present invention may be produced, for example, by radical polymerization, coordination polymerization with the aid of a Ziegler-Natta catalyst, anionic polymerization, or coordination polymerization with the aid of a metallocene catalyst.

The amount of polyolefin resin as component (B) for 100 parts by weight of the nylon resin as component (A) is 0.1-50 parts by weight, preferably 0.1-30 parts by weight, and more preferably 0. 5-30 parts by weight. With an amount less than 0.1 part by weight, the polyolefin resin does not contribute to improvement in weldability of the resin composition. With an amount more than 50 parts by weight, the polyolefin resin produces an adverse effect, such as decrease in flowability at the time of melt molding and decrease in heat resistance and mechanical strength.

The glass fiber as component (C) in the present invention may be one which is commonly used for resin reinforcement. It may be in the form of long fiber, short fiber (chopped strand), or milled fiber. The glass fiber is not specifically restricted in diameter. However, the fiber diameter usually ranges from 5 to 15 µm. The glass fiber may or may not be coated with or sized with ethylene-vinyl acetate copolymer or thermosetting resin. The glass fiber is preferably coated with a surface treating agent such as silane coupling agent and titanate coupling agent. The amount of the glass fiber in the resin composition for 100 parts by weight of the nylon resins is 10-150 parts by weight, preferably 20-80 parts by weight, and more preferably 20-60 parts by weight.

The copper compound as component (D) which may be present in a composition embodying the present invention includes, for example, cuprous chloride, cupric chloride, cuprous bromide, cupric bromide, cuprous iodide, cupric iodide, cupric sulfate, cupric nitrate, copper phosphate, cuprous acetate, cupric acetate, cupric salicylate, cupric stearate and cupric benzoate. The inorganic copper halide mentioned above may form a complex compound with, for example, xylylene diamine, 2-mercaptobenzimidazole or benzimidazole. Of these examples, cuprous compounds are preferable, cuprous halides are more preferable, and cuprous acetate and cuprous iodide are most preferable.

The copper compound contributes to the strength of the weld zone when molded parts are joined together and the welded product undergoes annealing. The amount of the copper compound for 100 parts by weight of the nylon resin is preferably less than 3 parts by weight, for example 0.01-3parts by weight, more preferably 0.015-2 parts by weight, still more preferably 0.02-2parts by weight. With an amount less than 0.01 part by weight, the copper compound may not fully produce its effect. Conversely, with an amount more than 3 parts by weight, the copper compound may liberate metallic copper at the time of melt molding, causing discoloration which degrades the product value.

Accordi ng to the present invention, the copper compound may be used in combination with an alkali halide compound. Examples of the alkali halide compound include lithium chloride, lithium bromide, lithium iodide, potassium chloride, potassium bromide, potassium iodide, sodium bromide and sodium iodide. Of these examples, potassium iodide and sodium iodide are particularly desirable. The amount of the alkali halide compound for 100 parts by weight of the nylon resin is preferably less than 5 parts by weight, for example. 0.01-5 parts by weight, more preferably 0.05-3 parts by weight.

The silicone compound as component (E) which may be present in a composition embodying the present invention is an organosilicone compound whose skeleton is a siloxane linkage having organic groups attached directly to silicon atoms therein. Examples of the organic group include a methyl group, ethyl group, phenyl group, vinyl group, and trifluoropropyl group. Any known silicone compounds may be used. Incidentally, the organic group may be partly substituted with an epoxy group, amino group, polyether group, carboxyl group, mercapto group, ester group chloroalkyl group, hydroxyl group or alkyl group having 3 or more carbon atoms.

Silicone compounds are classified into silicone oil, silicone elastomer, and silicone resin according to the degree of crosslinking (see "Silicone Material Handbook" by Toray-Dow Corning Co., Ltd., August 1993.) Any of these may be used in a composition embodying the present invention.

Preferred examples of the silicone compounds include dimethyl silicone oil, phenylmethyl silicone oil, alkyl-modified silicone oil, fluorosilicone oil, polyether-modified silicone oil, aliphatic ester-modified silicone oil, amino-modified silicone oil, carboxylic acid-modified silicone oil, carbinol-modified silicone oil, epoxy-modified silicone oil, and mercapto-modified silicone oil. Additional examples include polyethylene glycol-modified silicone oil and polypropylene glycol-modified silicone oil, which contribute to weld strength. These silicone compounds may be used in combination with one another.

The amount of the silicone compound as component (E) for 100 parts by weight of the nylon resin as component (A) is preferably less than 5 parts by weight, for example, 0.1-5 parts by weight, more preferably 1-3 parts by weight.

The glass fiber specified above may be used-in combination with other fibrous or non-fibrous inorganic fillers. Their Examples are listed below.
- Fibrous fillers such as carbon fiber, potassium titanate whisker, zinc oxide whisker, aluminum borate whisker, aramid fiber, alumina fiber, silicon carbide fiber, ceramic fiber, asbestos fiber, gypsum fiber and metal fiber.
- Silicates such as wollastonite, zeolite, sericite, kaolin, mica, clay, pyrophyllite, bentonite, asbestos, talc and alumina silicate.
- Metal compounds such as alumina, silicon oxide, magnesium oxide, zirconium oxide, titanium oxide and iron oxide.
- Carbonates such as calcium carbonate, magnesium carbonate and dolomite.
- Sulfates such as calcium sulfate and barium sulfate.
- Hydroxides such as magnesium hydroxide, calcium hydroxide and aluminum hydroxide.
- Non-fibrous fillers such as glass beads, ceramic beads, boron nitride, silicon carbide and silica, which may be hollow.

They may be used in combination with one another. These fibrous or non-fibrous fillers may be pretreated with an isocyanate compound, organosilane compound, organotitanate compound, organoborane compound or epoxy compound, so that they impart greater mechanical strength.

A nylon resin composition embodying the present invention may have, incorporated in it, several additives as exemplified below.
- Nucleating agents such as talc, kaolin, organic phosphorus compound and polyether ether ketone.
- Anti-coloring agents such as hypophosphite.
- Antioxidants such as hindered phenol and hindered amine.
- Slip agents such as polyalkylene glycol.
- Heat stabilizers, UV light stabilizers, and coloring agents.

A nylon resin composition embodying the present invention may be prepared, for example, in a particularly efficient way by melt-blending all the raw materials (such as nylon resin, polyolefin resin, and glass fiber, and optional copper compound and silicone compound) in a known melt blender (such as single- or twin-screw extruder, Banbury mixer, kneader, and mixing roll) at a temperature, say 220-330°C, selected according to the melting point of the nylon resin. This method may be modifies such that the composition is prepared from all the raw materials except the polyolefin resin which (in the form of pellets) is added to the composition afterwards.

In this way a weldable resin composition embodying the present invention is obtainable which has a melt viscosity whose coefficient of shear rate dependence is higher than 1.05 and can exhibit outstanding weldability.

The coefficient of shear rate dependence is a value defined by "ratio of increase in melt viscosity at a low shear rate" divided by "ratio of increase in melt viscosity at a high shear rate". The "ratio of increase in melt viscosity at a low shear rate" is a value defined by "melt viscosity of the weldable resin composition at a low shear rate" divided by "melt viscosity of the weldable resin composition excluding component (B) at a low shear rate". The ratio of increase in melt viscosity at a high shear rate" is a value defined by "melt viscosity of the weldable resin, composition at a high shear rate" divided by "melt: viscosity of the weldable resin composition excluding component (B) at a high shear rate". The low shear rate is 60 sec⁻¹ and the high shear rate is 6000 sec⁻¹. The melt viscosity (in poise) is measured under the following conditions.
Equipment: Capillograph 51 made by Toyo Seiki
Temperature: 20°C higher than the melting point of the nylon resin (in larger amount if two or more nylon resins are used).
Residence time: 5 minutes
Piston speed: 5 mm/min (for the shear rate of 60 sec⁻¹) or 500 mm/min (for the shear rate of 6000 sec⁻¹).

Incidentally, "the weldable resin composition excluding component (B) " denotes the resin composition which is composed of component (A) and component (C) and other optional components.

If the resin composition has a melt viscosity whose coefficient of shear rate dependence is high, it exhibits good flowability and hence good moldability at a high shear rate (which is normally encountered during injection molding) and it also increases in viscosity at a low shear rate (which is encountered -during welding) and hence it exhibits high weld strength. Therefore, the resin composition has a coefficient of shear rate dependence higher than 1.05, more preferably higher than 1.08, still more preferably higher than 1.10, so that it exhibits especially good practical weldability.

A weldable nylon resin compound embodying the present invention may be formed into weldable molded items by ordinary molding methods (such as injection molding, extrusion molding and blow molding) under ordinary molding conditions. The weldable molded items can be joined together to form a molded product of desired shape. They way have ribs on their welding surface so as to facilitate vibration welding, ultrasonic welding or microwave welding.

Welding of the weldable molded items may be accomplished in the following manner.
- Vibration welding: Two molded items are held together vertically such that their mating surfaces are pressed against each other, and they are subjected to vibration in the horizontal direction so that frictional heat for welding is generated at the making surfaces. The frequency of vibration is 100-300 Hz and the amplitude of vibration is 0.5-2.0 mm.
- Ultrasonic welding: Two molded items are held together vertically such that their mating surfaces are pressed against each other, and they are subjected- to ultrasonic vibration in the vertical direction so that frictional heat for welding is generated at the surfaces. The frequency of vibration is 100-300 Hz and the amplitude of vibration is 0.5-2.0 mm.

Using a welding method mentioned above, it is possible to produce welded products from resin compositions embodying the present invention. The resulting welded products are superior in weld strength, heat resistance, external appearance, dimensional and weld uniformity. Stable, high weld strength is the main advantage. Owing to this advantage, the welded produces will find use in the field of automotive parts, such as air intake manifolds (for the intake system), water inlet and water outlets (for the cooling system), fuel injection and fuel delivery pipes (for the fuel system) and oil tanks and other vessels.

Preferred embodiments of the present invention will now be described in more detail with reference to che accompanying drawings and the following Examples.

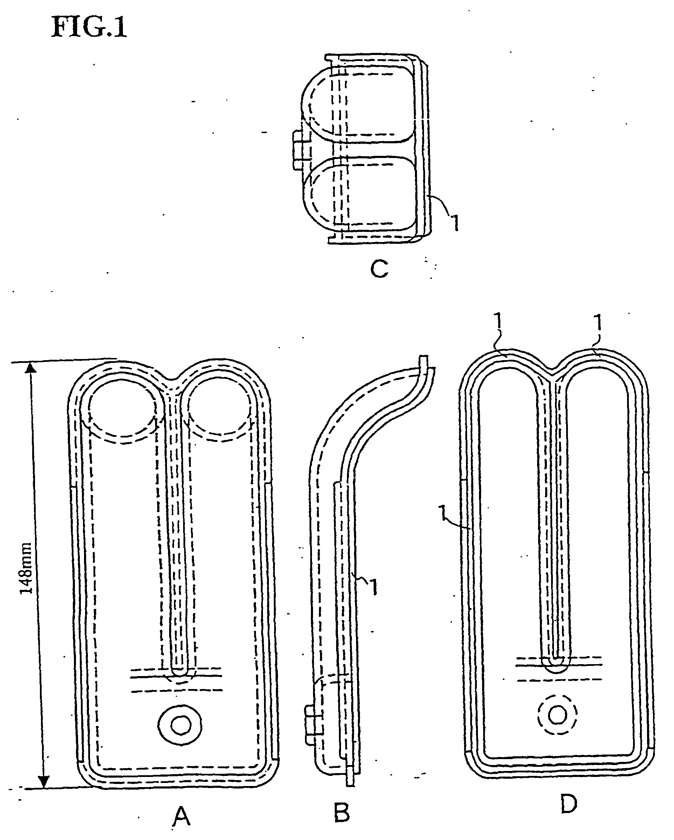

In the accompanying drawings, Fig. 1 is a diagram shewing the shape of a test piece used to evaluate the strength of vibration welding in the Examples. Parts A, E, C and D are a plan view, a front view, a right side view and a bottom view, respectively.

Fig. 2. is a diagram showing the shape of another test piece used to evaluate the strength of vibration welding in the Examples. Parts A, B and C are plan view, a front view and a right side view, respectively.

Fig. 3 is a diagram showing the shape of a hollow molded product obtained by vibration welding from the test pieces each shown in Fig. 1 and Fig. 2. Parts A, B and C are plan view, from view and right side view, respectively.

Fig. 4 is a plan view showing the shape of a test piece used to evaluate the strength of injection welding in the Examples.

Fig. 5 is a plan view showing the shape of a molded product formed from the test pieces shown in Pig. 4, which was used to evaluate the strength of injection welding in the Examples.

In the Examples and Comparative Examples, amounts are expressed in terms of parts by weight.

Strength of material, flowability and weld strength were measured by the methods explained below.

### (1) Strength of material:

Tensile strength : according to ASTM D638
Flexural modulus : according to ASTM D790

### (2) Flowability:

A sample of the material is injected into a mold for spiral flow measurement (10 mm wide, 2 mm thick and 600 mm long) under the conditions specified below.
Injection temperature: 20°C higher than the melting point of the nylon (in larger amount if two or more nylon resins are used).
Injection pressure: 30 kgf/cm²G
Mold temperature: 80°C
Flowability is expressed in terms of the length of the distance over which the injected melt has flowed in the mold. The longer the distance, the better the flowability.

### (3) Weld strength (in the case of vibration welding)

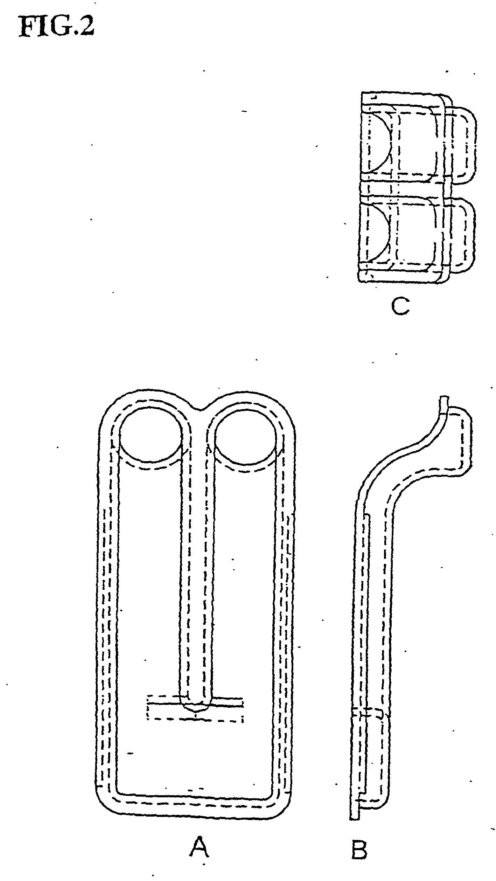

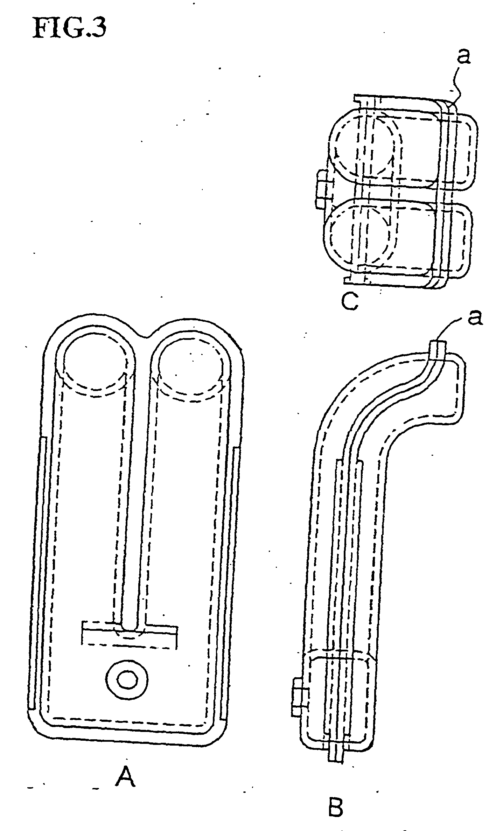

Two test pieces each having a 1.5-mm wide mating surface and 2.5-mm high bead 1 are injection-molded under ordinary conditions as shown in Figs. 1 and 2. They are joined together at weld zone "a" by vibration welding under the following conditions by using a vibration welding machine, Model 2850, made by Branson Co., Ltd. Frictional heat generated by vibration melts the bead, thereby giving a welded hollow product as shown in Fig. 3.
Clamp Pressure : 100 kgf
Frequency : 240 Hz
Amplitude : 1.5 mm
Melt down : 1.5 mm

The welded hollow product thus obtained is filled with water and subjected to internal pressure in a water tank. The pressure to bring about burst is regarded as weld strength.

The welded hollow product is kept at 150°C for 10 hours in a heating oven and then measured for weld strength in the same way as mentioned above. The retention of weld strength is calculated.

### (4) Weld strength (in the case of injection welding)

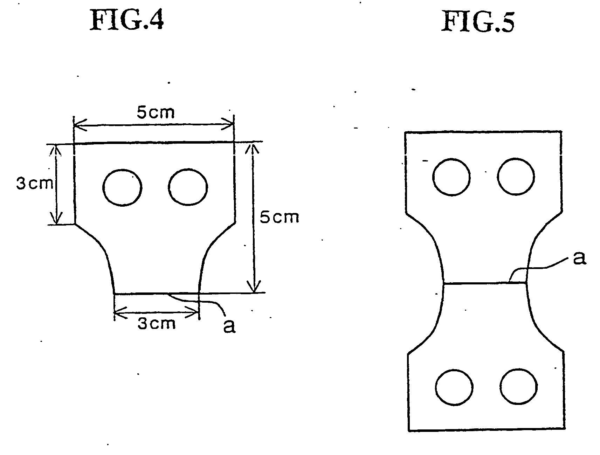

Two test pieces (10 mm thick) are injection-molded under ordinary conditions as shown in Fig. 4. They are inserted into a mold for fatigue test samples and joined together by injection welding in such a way that the side 'a' constitutes the weld zone. The welded product thus obtained is subjected to tensile test (at a pulling rate of 5 mm/s=c and a span of 50 mm). The force required to break the weld zone 'a' is regarded as weld strength.

The nylon resin and polyolefin resin used in the Examples and Comparative Examples are specified below.

### Nylon resin

N6 : nylon 6 resin having a melting point of 225°C and a relative viscosity of 2.70.
N6/66 : nylon 6/66 copolymer (97/3 in molar ratio) having a melting point of 217°C and a relative viscosity of 2.65.
N66 : nylon 66 resin having a melting point of 265°C and a relative viscosity of 2.90.
N610 : nylon 610 resin having a meltingpoint of 225°C and a relative viscosity of 2.70.
6T/12 : nylon 6T/12 copolymer (60/40 inmolar ratio) having a melting point of 300°C and a relative viscosity of 2.50.

### Polyolefin resin

B-1 : polypropylene (MFR = 1.5)
B-2 : modified polypropylene obtained from 100 parts by weight of
B-1, 1 part by weight of maleic anhydride, and 0.1 part by weight of 2,5-dimethyl-2,5-di (tert-butylperoxy) hexane by melt extrusion through a twin-screw extruder at a cylinder temperature of 220°C.
B-3 : ionomer of ethylene-methacrylic acid copolymer, with its carboxylic acid moiety partly forming a zinc salt.
B-4 : modified ethylene-1-butene copolymer obtained from 100 parts by weight of ethylene-1-butene copolymer, 1 part by weight of maleic anhydride, and 0.1 part by weight of 2,5-dimethyl-2,5-di(tert-butylperoxy) hexane by melt extrusion through a twin-screw extruder at a cylinder temperature of 230°C.
B-5 : modified low-density polyethylene obtained from 100 parts by weight of low-density polyethylene (having a density of 0.905, produced with the aid of metallocene catalyst), 1 part by weight of maleic anhydride, and 0.1 parts by weight of 2,5-dimethyl-2.5-di(tert-butylperoxy)hexane by melt extrusion through a twin-screw extruder at a cylinder temperature of 230°C.

### Examples 1 to 16 and Comparative Examples 1 to 4

Several compositions were made from nylon resin, polyolefin resin, glass fiber (13 µm in diameter), and copper compound according to the formulations shown in Tables 1 to 5. Each composition was pelletized by melt blending through a twin-screw extruder (Model TEX30, made by The Japan Steel Works, Ltd.) at a cylinder temperature of 250-280°C and a screw speed of 150 rpm. The resulting pellets were dried and then invention molded (at a mold temperature of 80°C) into various test pieces. The pellet samples and test pieces were measured for melt viscosity, flowability, and strength. Hollow products were forced from test pieces by vibration welding, and they were tested for weld strength. The results are shown in Tables 1 to 5.

Incidentally, in Comparative Example 2, MAH-PPE denotes polyphenylene ether resin modified with maleic anhydride. The compound used as the heat resistant material is CuI (cuprous iodide) or KI (potassium iodide) . The silicone compound is polypropylene glycol-modified silicone oil.

Examples 1 to 5 and 7 to 16 demonstrate that the weldable resin composition of the present invention has good flowability and material strength, which are balanced well with each other,and a melt viscosity whose coefficient of shear rate dependence is high. The resin composition gave, by vibration welding, hollow products having high weld strength. Example 6 is included for reference purposes and does not illustrate the invention of claim 1.

In contrast, the resin compositions in Comparative Examples 1 to 4, which were not incorporated with a polyolefin resin, gave hollow products which are poor in weld strength and strength retention after annealing.

**Table 1**

| | Item | Unit | Example 1 | Example 2 | Example 3 | Example 4 | Example 5 |
|---|---|---|---|---|---|---|---|
| Formulation | Nylon/resin (a) | ― | N6 | N6 | N6 | N6 | N6 |
| | Amount | pbw | 100 | 100 | 100 | 100 | 100 |
| | Polyolefin resin | ― | B-1 | B-2 | 8-3 | B-4 | 8-5 |
| | Amount | pbw | 5 | 5 | 5 | 5 | 5 |
| | Amount of glass fiber | pbw | 45 | 45 | 45 | 45 | 45 |
| Flowability | Length of flow | mm | 150 | 145 | 150 | 145 | 148 |
| Material strengh | Tensile strength | MPa | 160 | 165 | 170 | 165 | 165 |
| | Flexural modulus | GPa | 8.2 | 82 | 8.0 | 7.8 | 8.0 |
| Melt viscosity | at low shear rate | poise | 12520 | 13700 | 12600 | 14910 | 14600 |
| | at high sheer rate | poise | 1710 | 1820 | 1700 | 1860 | 1790 |
| | Coefficient of shear rate dependence | ― | 1.05 | 1.08 | 1.06 | 1.15 | 1.17 |
| Weldability | Strength of vibration welding | kgf/cm² | 11.2 | 11.9 | 12.5 | 13.8 | 13.9 |
| | After annealing (150°C, 10 h) | kgf/cm² | 9.7 | 10.5 | 11.0 | 12.0 | 12.2 |
| | Retention of strength | % | 87 | 87 | 88 | 87 | 88 |

**Table 2**

| | Item | Unit | Example 6* | Example 7 | Example 8 | Example 9 | Example 10 |
|---|---|---|---|---|---|---|---|
| Formulation | Nylon resin (a) | ― | N6 | N6 | N6 | N6 | N6 |
| | Amount | pbw | 100 | 100 | 100 | 100 | 100 - |
| | Polyolefin resin | ― | S-2 | B-4 | B-5 | B-4 | B-4 |
| | Amount | pbw | 2 | 10 | 10 | 15 | 5 |
| | Amount glass fiber | pbw | 45 | 45 | 45 | 50 | 45 |
| | Copper compound | ― | | Cul/Kl | Cul/Kl | Cul/Kl | Cul/Kl |
| | Amount | pbw | ― | 0.04/0.35 | 0.04/0.35 | 0.04/0.35 | 0.04/0.35 |
| | Silicon compound | ― | | | | | |
| | Amount | pbw | ― | ― | ― | ― | 1 |
| Flowability | Length of flow | mm | 147 | 140 | 140 | 137 | 150 |
| Material strength | Tensile strength | MPa | 170 | 165 | 165 | 160 | 165 |
| | Flexural modulus | GPa | 8.0 | 7.5 | 75 | 7.0 | 7.7 |
| Melt viscosity | at low shear rate | poise | 12000 | 15880 | 18120 | 17560 | 14800 |
| | at highs shear rate | poise | 1990 | 1900 | 1850 | 2000 | 1800 |
| | Coefficient of shear rate dependence | ― | 1.62 | 120 | 1.25 | 1.26 | 1.18 |
| Weldability | Strength of vibration welding | kgf/cm² | 10.0 | 14.4 | 14.5 | 15.0 | 148 |
| | After annealing (150°C, 10h) | kg/cm² | 8.8 | 14.2 | 14.4 | 14.7 | 14.6 |
| | Retention of strength | % | 88 | 99 | 99 | 58 | 99 |

| | | | | | | | |
|---|---|---|---|---|---|---|---|
| * Example 6 is a reference example. | | | | | | | |

**Table 3**

| | Item | Unit | Example 11 | Example 12 | Example 13 | Example 14 |
|---|---|---|---|---|---|---|
| Fomulation | Nylon resin (a) | ― | N66 | N66 | N66 | N6/66 |
| | Amount | pbw | 100 | 100 | 100 | 100 |
| | Polyolefin resin | ― | B4 | B-5 | B-4 | B-4 |
| | Amount | pbw | 5 | 10 | 15 | 5 |
| | Amount of glass fiber | pbw | 45 | 45 | 50 | 45 |
| | Copper compound | ― | Cul/KI | Cul/KI | Cul/KI | Cul/KI |
| | Amount | pbw | 0.04/0.35 | 0.04/0.35 | 0.04/0.35 | 0.04/0.35 |
| Flowability | Length of flow | mm | 150 | 150 | 145 | 145 |
| Material strength | Tensile strength | MPa | 180 | 180 | 174 | 155 |
| | Flexural modulus | GPa | 8.3 | 8.0 | 7.8 | 7.3 |
| Melt viscosity | at low shear rate | poise | 9300 | 9300 | 11050 | 11200 |
| | at high shear rate | poise | 1130 | 1100 | 1240 | 1300 |
| | Coefficient of shear rate dependence | ― | 1.09 | 1.12 | 1.18 | 1.11 |
| Weldability | Strength of vibration welding | kgf/cm² | 10.0 | 11.3 | 121 | 13.4 |
| | After annealing (150°C, 10h) | kgf/cm² | 10.0 | 112 | 11.8 | 13.4 |
| | Retention of strength | % | 100 | 99 | 98 | 100 |

**Table 4**

| | Item | Unit | Example 15 | Example 16 |
|---|---|---|---|---|
| Formulation | Nylon resn(a) | ― | N6 | N66 |
| | Amount | pbw | 70 | 80 |
| | Nylon resin(b) | ― | N610 | 6T/12 |
| | Amount | pbw | 30 | 20 |
| | ― Polyolefin resin | | B-4 | B-4 |
| | Amount | pbw | 5 | 5 |
| | Amount of glass fiber | pbw | 45 | 45 |
| | Copper compound | ― | Cul/KI | Cul/KI |
| | Amount | pbw | 0.04/0.35 | 0.0.4/0.35 |
| Flowability | Length of flow | mm | 150 | 140 |
| Material strength | Tensile strength | MPa | 160 | 175 |
| | Flexural modulus | GPa | 7.2 | 8.5 |
| Melt viscosity | at low shear rate | poise | 13050 | 13780 |
| | at high shear rate | poise | 1600 | 1460 |
| | Coefficient of shear rate dependence | ― | 1.17 | 1.25 |
| Weldability | Strength of vibration welding | kgf/cm² | 14.0 | 13.2 |
| | After annealing (150°C, 10h) | kgf/cm² | 13.8 | 13.0 |
| | Retention of strength | % | 99 | 98 |

**Table 5**

| | Item | Unit | Comparative Example 1 | Comparative Example 2 | Comparative Example 3 | Comparative Example 4 |
|---|---|---|---|---|---|---|
| Formulation | Nylon resin (a) | ― | N6 | N6 | N66 | N6/66 |
| | Amount | pbw | 100 | 100 | 100 | 100 |
| | Other resin | ― | | MAH-PPE | | |
| | Amount | pbw | ― | 10 | ― | ― |
| | Amount of glass fiber | pbw | 45 | 45 | 45 | 45 |
| Flowability | Length of flow | mm | 150 | 138 | 155 | 150 |
| Material strength | Tensile strength | MPa | 170 | 165 | 180 | 158 |
| | Flexural modulus | GPa | 82 | 8.2 | 8.5 | 7.5 |
| Melt viscosity | at low shear rate | poise | 11430 | 15430 | 7550 | 8930 |
| | at high shear rate | poise | 1640 | 2150 | 1000 | 1150 |
| | Coefficient of shear rate dependence | ― | ― | 1.03 | ― | ― |
| Weldability | Strength of vibration welding | kgf/cm² | 9.0 | 8.5 | 7.5 | 9.4 |
| | After annealing (150°C, 10h) | kgf/cm² | 7.8 | 7.6 | 6.0 | 7.7 |
| | Retention of strength | % | 87 | 89 | 80 | 82 |

### Examples 17 and 18 and Comparative Examples 5 and 6

The sane procedure as in Examples 1 to 16 was repeated except that the formulations were changed as shown in Table 6 and vibration welding was replaced by injection welding. The results are shown in Table 6. Incidentally, in Comparative Example 6, MAH-PPE denotes polyphenylene ether resin modified with maleic anhydride.

Examples 17 and 18 demonstrate that weldable resin compositions embodying the present invention have good flowability and material strength, which are balanced well with each other, and a melt viscosity whose coefficient of shear rate dependence is high. The resin composition gave, by injection welding, hollow products having high weld strength.

In contrast, the resin compositions in Comparative Examples 5 to 6, which were not incorporated with a polyolefin resin, gave hollow products which are poor in weld strength.

**Table 6**

| | Item | Unit | Example 17 | Example 18 | Comparative Example 5 | Comparative Example 6 |
|---|---|---|---|---|---|---|
| Formulation | Nylon resin (a) | ― | N6 | N6 | N6 | N6 |
| | Amount | pbw | 100 | 100 | 100 | 100 |
| | Polyolefin resin | | B-4 | B-5 | | |
| | Amount | pbw | 5 | 5 | ― | ― |
| | Other resin | ― | ― | ― | ― | MAH-PPE |
| | Amount | pbw | ― | ― | | 5 |
| | Amount of glass fiber | pbw | 45 | 45 | 45 | 45 |
| Flowability | Length of flow | mm | 145 | 148 | 150 | 138 |
| Material strength | Tensile strength | mpa | 165 | 165 | 170 | 165 |
| | Flexural modulus | GPa | 7.8 | 8.0 | 82 | 8.2 |
| Melt viscosity | at low shear rate | poise | 14910 | 14600 | 11430 | 15430 |
| | at high shear rate | poise | 1860 | 1790 | 1640 | 2150 |
| | Coefficient of shear rate dependence | ― | 1.15 | 1.17 | ― | 1.03 |
| Weldability | Strength of injection welding | MPa | 73 | 75 | 66 | 58 |

## Claims

1. A weldable resin composition for producing articles capable of weld-bonding by vibration welding, the resin composition comprising 100 parts by weight of a nylon resin as component (A), 0.1-50 parts by weight of a polyolefin resin as component (B) and 10-150 parts by weight of glass fiber as component (C) blended together, the resin composition having a melt viscosity whose coefficient of shear rate dependence is higher than 1.05,
wherein the coefficient of shear rate dependence is defined as:
ratio of increase in melt viscosity at a low shear rate/ratio of increase in melt viscosity at a high shear rate; and
wherein the ratio of increase in melt viscosity at a low shear rate is defined as:
melt viscosity of the weldable resin composition at a low shear rate/melt viscosity of the weldable resin composition excluding component (B) at a low shear rate; and
wherein the ratio of increase in melt viscosity at a high shear rate is defined as:
melt viscosity of the weldable resin composition as a high shear rate/melt viscosity of the weldable resin composition excluding component (B) at a high shear rate, in which the low shear rate is 60 sec⁻¹, the high shear rate is 6000 sec⁻¹, and the melt viscosity (poise) is measured at 20°C higher than the melting point of nylon resin (A).

2. A weldable resin composition according to Claim 1, wherein the polyolefin resin as component (B) has a polyolefin skeleton in the main chain and comprises at least one species selected from polyethylene, polypropylene, polyacrylic ester, polymethacrylic ester ethylene-α-olefin copolymer, copolymer of (ethylene and/or propylene) and (unsaturated carboxylic acid and/or unsaturated carboxylic ester) with its carboxylic acid partly neutralized to form a metal salt, block copolymer of conjugated diene and vinyl aromatic hydrocarbon, and hydrogenated product of the block copolymer.

3. A weldable resin composition according to Claim 2, wherein the polyolefin resin as component (B) is polyethylene and/or ethylene-α-olefin copolymer.

4. A weldable resin composition according to Claim 3, wherein the polyolefin resin as component (B) is an ethylene-α-olefin copolymer in which the α-olefin moiety is at least one species selected from α-olefins having 3-20 carbon atoms and the amount of the comonomer is 1-30 mol%.

5. A weldable resin composition according to any one of Claims 1 to 4, wherein the polyolefin resin as component (B) is a modified polyolefin resin in which the modifier is at least one compound selected from unsaturated carboxylic acids and derivatives thereof.

6. A weldable resin composition according to Claim 5, wherein, in the modified polyolefin, the modifier is at least one compound selected from unsaturated carboxylic acids, metal salts thereof, esters thereof, amides thereof and acid anhydrides thereof.

7. A weldable resin composition according to any one of Claims 1 to 6, which further comprises 0.01-3 parts by weight of a copper compound as component (D) for 100 parts by weight of nylon resin.

8. A weldable resin composition according to Claim 7, wherein the copper compound is a cuprous compound.

9. A weldable resin composition according to Claim 8, wherein the cuprous compound is cuprous halide.

10. A weldable resin composition according to any one of Claims 1 to 9, which further comprises 0.1-5 parts by weight of a silicone compound as component (E) for 100 parts by weight of nylon resin.

11. A weldable resin composition according to any one of claims 1 to 10, wherein the nylon resin is at least one species selected from nylon 66, nylon 6 and copolymers derived therefrom.

12. A weldable resin composition according to Claim 11, wherein the nylon resin as component (A) is composed of (a) 99-50 wt% of at least one species selected from nylon 66, nylon 6, and copolymers composed mainly of them and (b) 1-50 wt% of at least one species selected from nylon resins other than (a) defined above.

13. A method of producing a weldable resin composition as claimed in Claim 1, which method comprises melt-blending 100 parts by weight of nylon resin as component (A), 0.1-50 parts by weight of polyolefin resin as component (B), 10-150 parts by weight of glass fiber as component (C), 0-3 parts by weight of a copper compound as component (D), and 0-5 parts by weight of a silicone compound as component (E), which method comprises melt-blending 100 parts by weight of nylon resin as component (A), 10-150 parts by weight of glass fiber as component (C), 0-3 parts by weight of a copper compound as component (D), and 0-5 parts by weight of a silicone compound as component (E), and then melt-blending the resulting composition with 0.1-50 parts by weight of polyolefin resin as component (B).

14. A molded product produced from a weldable resin composition as defined in any one of Claims 1 to 12.

15. A method of producing a molded product by welding two or more molded items each formed from a weldable resin composition as defined in anyone of Claims 1 to 12.

16. A method according to Claim 15, wherein the molded product is hollow.

17. A molded product produced by a method as defined in claim 15 or 16.

## Revendications

1. Composition de résine soudable destinée à produire des articles capables de se lier par soudure, par soudage par vibration, la composition de résine comprenant 100 parties en poids d'une résine de nylon en tant que composant (A), 0,1 à 50 parties en poids d'une résine polyoléfine en tant que composant (B) et 10 à 150 parties en poids de fibre de verre en tant que composant (C) mélangés ensemble, la composition de résine ayant une viscosité en fusion dont le coefficient de dépendance à la vitesse de cisaillement est plus élevé que 1,05,
dans laquelle le coefficient de dépendance à la vitesse de cisaillement est défini comme :
rapport d'augmentation en viscosité en fusion à une vitesse de cisaillement faible/rapport d'augmentation en viscosité en fusion à une vitesse de cisaillement élevée ; et
dans laquelle le rapport d'augmentation en viscosité en fusion à une vitesse de cisaillement faible est défini comme :
viscosité en fusion de la composition de résine soudable à une vitesse de cisaillement faible/viscosité en fusion de la composition de résine soudable excluant le composant (B) à une vitesse de cisaillement faible ; et
dans laquelle le rapport d'augmentation en viscosité en fusion à une vitesse de cisaillement élevée est défini comme :
viscosité en fusion de la composition de résine soudable en tant que vitesse de cisaillement élevée/viscosité en fusion de la composition de résine soudable excluant le composant (B) à une vitesse de cisaillement élevée, dans lequel la vitesse de cisaillement faible est de 60 sec⁻¹, la vitesse de cisaillement élevée est de 6 000 sec⁻¹, et la viscosité en fusion (poise) est mesurée à 20 °C de plus que le point de fusion de la résine de nylon (A).

2. Composition de résine soudable selon la revendication 1, dans laquelle la résine polyoléfine en tant que composant (B) a un squelette de polyoléfine dans la chaîne principale et comprend au moins une espèce choisie parmi le polyéthylène, le polypropylène, un poly(ester acrylique), un poly(ester méthacrylique), un copolymère d'éthylène-α-oléfine, un copolymère de (éthylène et/ou propylène) et de (un acide carboxylique insaturé et/ou un ester carboxylique insaturé) avec son acide carboxylique neutralisé en partie pour former un sel métallique, un copolymère séquencé d'un diène conjugué et d'un hydrocarbure aromatique de vinyle, et un produit hydrogéné du copolymère séquencé.

3. Composition de résine soudable selon la revendication 2, dans laquelle la résine polyoléfine en tant que composant (B) est du polyéthylène et/ou un copolymère d'éthylène-α-oléfine.

4. Composition de résine soudable selon la revendication 3, dans laquelle la résine polyoléfine en tant que composant (B) est un copolymère d'éthylène-α-oléfine dans lequel la fraction α-oléfine est au moins une espèce choisie parmi les α-oléfines ayant 3 à 20 atomes de carbone et la quantité du comonomère est de 1 à 30 % en mol.

5. Composition de résine soudable selon l'une quelconque des revendications 1 à 4, dans laquelle la résine polyoléfine en tant que composant (B) est une résine polyoléfine modifiée dans laquelle le modificateur est au moins un composé choisi parmi les acides carboxyliques insaturés et les dérivés de ceux-ci.

6. Composition de résine soudable selon la revendication 5, dans laquelle, dans la polyoléfine modifiée, le modificateur est au moins un composé choisi parmi les acides carboxyliques insaturés, les sels métalliques de ceux-ci, les esters de ceux-ci, les amides de ceux-ci et les anhydrides d'acide de ceux-ci.

7. Composition de résine soudable selon l'une quelconque des revendications 1 à 6, qui comprend en outre 0,01 à 3 parties en poids d'un composé de cuivre en tant que composant (D) pour 100 parties en poids de résine de nylon.

8. Composition de résine soudable selon la revendication 7, dans laquelle le composé de cuivre est un composé cuivreux.

9. Composition de résine soudable selon la revendication 8, dans laquelle le composé cuivreux est un halogénure cuivreux.

10. Composition de résine soudable selon l'une quelconque des revendications 1 à 9, qui comprend en outre 0, 1 à 5 parties en poids d'un composé de silicone en tant que composant (E) pour 100 parties en poids d'une résine de nylon.

11. Composition de résine soudable selon l'une quelconque des revendications 1 à 10, dans laquelle la résine de nylon est au moins une espèce choisie parmi le nylon 66, le nylon 6 et les copolymères qui en sont dérivés.

12. Composition de résine soudable selon la revendication 11, dans laquelle la résine de nylon en tant que composant (A) est composée de (a) 99 à 50 % en poids d'au moins une espèce choisie parmi le nylon 66, le nylon 6, et les copolymères composés principalement de ceux-ci et (b) 1 à 50 % en poids d'au moins une espèce choisie parmi les résines de nylon autres que (a) défini ci-dessus.

13. Procédé de production d'une composition de résine soudable telle que définie dans la revendication 1, lequel procédé comprend l'étape consistant à mélanger en fusion 100 parties en poids d'une résine de nylon en tant que composant (A), 0,1 à 50 parties en poids d'une résine polyoléfine en tant que composant (B), 10 à 150 parties en poids de fibre de verre en tant que composant (C), 0 à 3 parties en poids d'un composé de cuivre en tant que composant (D), et 0 à 5 parties en poids d'un composé de silicone en tant que composant (E), lequel procédé comprend les étapes consistant à mélanger en fusion de 100 parties en poids d'une résine de nylon en tant que composant (A), 10 à 150 parties en poids de fibre de verre en tant que composant (C), 0 à 3 parties en poids d'un composé de cuivre en tant que composant (D), et 0 à 5 parties en poids d'un composé de silicone en tant que composant (E), puis mélanger en fusion la composition résultante avec 0,1 à 50 parties en poids de résine polyoléfine en tant que composant (B).

14. Produit moulé produit à partir d'une composition de résine soudable telle que définie dans l'une quelconque des revendications 1 à 12.

15. Procédé de production d'un produit moulé par soudage de deux ou plus articles moulés chacun formé à partir d'une composition de résine soudable telle que définie dans l'une quelconque des revendications 1 à 12.

16. Procédé selon la revendication 15, dans lequel le produit moulé est creux.

17. Produit moulé produit par un procédé tel que défini dans la revendication 15 ou 16.

## Patentansprüche

1. Schweißbare Harzzusammensetzung zur Herstellung von Gegenständen, die durch Vibrationsschweißen schweißverklebt werden können, wobei die Harzzusammensetzung 100 Gewichtsteile eines Nylonharzes als Komponente (A), 0,1-50 Gewichtsteile eines Polyolefinharzes als Komponente (B) und 10-150 Gewichtsteile Glasfasern als Komponente (C) umfasst, die vermischt sind, wobei die Harzzusammensetzung eine Schmelzviskosität aufweist, deren Schergeschwindigkeitsabhängigkeitskoeffizient höher als 1,05 ist,
worin der Schergeschwindigkeitsabhängigkeitskoeffizient definiert ist als:
Steigerungsverhältnis der Schmelzviskosität bei einer geringeren Schergeschwindigkeit/Steigerungsverhältnis der Schmelzviskosität bei einer höheren Schergeschwindigkeit; und
worin das Steigerungsverhältnis der Schmelzviskosität bei einer geringeren Schergeschwindigkeit definiert ist als:
Schmelzviskosität der schweißbaren Harzzusammensetzung bei einer geringen Schergeschwindigkeit/Schmelzviskosität der schweißbaren Harzzusammensetzung ohne Komponente (B) bei einer geringen Schergeschwindigkeit; und
worin das Steigerungsverhältnis der Schmelzviskosität bei einer höheren Schergeschwindigkeit definiert ist als:
Schmelzviskosität der schweißbaren Harzzusammensetzung bei einer hohen Schergeschwindigkeit/Schmelzviskosität der schweißbaren Harzzusammensetzung ohne Komponente (B) bei einer hohen Schergeschwindigkeit, worin die geringe Schergeschwindigkeit 60 s⁻¹ beträgt, die höhere Schergeschwindigkeit 6.000 s⁻¹ beträgt und die Schmelzviskosität (Poise) bei 20 °C über dem Schmelzpunkt des Nylonharzes (A) gemessen wird.

2. Schweißbare Harzzusammensetzung nach Anspruch 1, worin das als Komponente (B) verwendete Polyolefinharz ein Polyolefinskelett in der Hauptkette aufweist und zumindest eine aus Polyethylen, Polypropylen, Polyacrylester, Polymethacrylester, Ethylen-α-Olefin-Copolymer, Copolymer von (Ethylen und/oder Propylen) mit (ungesättigter Carbonsäure und/oder ungesättigtem Carbonsäureester), wobei die Carbonsäure teilweise neutralisiert ist, um ein Metallsalz zu bilden, Blockcopolymer von konjugiertem Dien mit Vinylaromatenkohlenwasserstoff und hydrierten Produkten des Blockcopolymers ausgewählte Spezies umfasst.

3. Schweißbare Harzzusammensetzung nach Anspruch 2, worin das als Komponente (B) verwendete Polyolefinharz Polyethylen und/oder ein Ethylen-α-Olefin-Copolymer ist.

4. Schweißbare Harzzusammensetzung nach Anspruch 3, worin das als Komponente (B) verwendete Polyolefinharz ein Ethylen-α-Olefin-Copolymer ist, worin die α-Olefin-Gruppierung zumindest eine aus α-Olefinen mit 3-20 Kohlenstoffatomen ausgewählte Spezies ist und die Comonomermenge 1-30 Mol-% beträgt.

5. Schweißbare Harzzusammensetzung nach einem der Ansprüche 1 bis 4, worin das als Komponente (B) verwendete Polyolefinharz ein modifiziertes Polyolefinharz ist, worin der Modifikator zumindest eine aus ungesättigten Carbonsäuren und Derivaten davon ausgewählte Verbindung ist.

6. Schweißbare Harzzusammensetzung nach Anspruch 5, worin der Modifikator im modifizierten Polyolefin zumindest eine aus ungesättigten Carbonsäuren, Metallsalzen davon, Estern davon, Amiden davon und Säureanhydriden davon ausgewählte Verbindung ist.

7. Schweißbare Harzzusammensetzung nach einem der Ansprüche 1 bis 6, die ferner 0,01-3 Gewichtsteile einer Kupferverbindung als Komponente (D) pro 100 Gewichtsteile Nylonharz umfasst.

8. Schweißbare Harzzusammensetzung nach Anspruch 7, worin die Kupferverbindung eine Kupfer(I)-Verbindung ist.

9. Schweißbare Harzzusammensetzung nach Anspruch 8, worin die Kupfer(I)-Verbindung ein Kupfer(I)-halogenid ist.

10. Schweißbare Harzzusammensetzung nach einem der Ansprüche 1 bis 9, die ferner 0,1-5 Gewichtsteile einer Siliconverbindung als Komponente (E) pro 100 Gewichtsteile Nylonharz umfasst.

11. Schweißbare Harzzusammensetzung nach einem der Ansprüche 1 bis 10, worin das Nylonharz zumindest eine aus Nylon 66, Nylon 6 und davon abgeleiteten Copolymeren ausgewählte Spezies ist.

12. Schweißbare Harzzusammensetzung nach Anspruch 11, worin das als Komponente (A) verwendete Nylonharz aus (a) 99-50 Gew.-% zumindest einer aus Nylon 66, Nylon 6 und Copolymeren, die hauptsächlichen aus diesen bestehen, ausgewählten Spezies und (b) 1-50 Gew.-% zumindest einer aus anderen Nylonharzen als oben unter (a) definiert ausgewählten Spezies besteht.

13. Verfahren zur Herstellung einer schweißbaren Harzzusammensetzung nach Anspruch 1, wobei das Verfahren das Schmelzmischen von 100 Gewichtsteilen Nylonharz als Komponente (A), 0,1-50 Gewichtsteilen Polyolefinharz als Komponente (B), 10-150 Gewichtsteilen Glasfasern als Komponente (C), 0-3 Gewichtsteilen einer Kupferverbindung als Komponente (D) und 0-5 Gewichtsteilen einer Siliconverbindung als Komponente (E) umfasst, wobei das Verfahren das Schmelzmischen von 100 Gewichtsteilen Nylonharz als Komponente (A), 10-150 Gewichtsteilen Glasfasern als Komponente (C), 0-3 Gewichtsteilen einer Kupferverbindung als Komponente (D) und 0-5 Gewichtsteilen einer Siliconverbindung als Komponente (E) und dann das Schmelzmischen der resultierenden Zusammensetzung mit 0,1-50 Gewichtsteilen Polyolefinharz als Komponente (B) umfasst.

14. Formteil aus einer schweißbaren Harzzusammensetzung nach einem der Ansprüche 1 bis 12.

15. Verfahren zur Herstellung eines Formteils durch Verschweißen von zwei oder mehr Formstücken, die jeweils aus einer schweißbaren Harzzusammensetzung nach einem der Ansprüche 1 bis 12 gebildet sind.

16. Verfahren nach Anspruch 15, worin der Formteil hohl ist.

17. Formteil, hergestellt durch ein Verfahren nach Anspruch 15 oder 16.
